Europäisches Patentamt

European Patent Office

Office européen des brevets

(19)

(11) Publication number : **0 510 889 A1**

(12) **EUROPEAN PATENT APPLICATION**

(21) Application number : **92303486.2**

(22) Date of filing : **16.04.92**

(51) Int. Cl.⁵ : **G11B 7/24, G11B 23/033**

(30) Priority : **19.04.91 JP 88707/91**

(43) Date of publication of application :
**28.10.92 Bulletin 92/44**

(84) Designated Contracting States :
**DE FR GB IT**

(71) Applicant : **SHARP KABUSHIKI KAISHA**
**22-22 Nagaike-cho Abeno-ku**
**Osaka 545 (JP)**

(72) Inventor : **Inui, Tetsuya**
**14, Inyo-cho**
**Nara-shi, Nara-ken (JP)**
Inventor : **Mieda, Michinobu**
**422-6, Iwami, Miyake-cho**
**Shiki-gun, Nara-ken (JP)**
Inventor : **Nakajima, Junsaku**
**6-3-211, Saiwai-cho**
**Yamatotakada-shi, Nara-ken (JP)**
Inventor : **Ohta, Kenji**
**3-9-17, Hirosedai, Kawai-cho**
**Kitakatsuragi-gun,Nara-ken (JP)**

(74) Representative : **Brown, Kenneth Richard et al**
**R.G.C. Jenkins & Co. 26 Caxton Street**
**London SW1H 0RJ (GB)**

(54) **Cartridge for accomodating flexible optical disk.**

(57) An optical disk cartridge (S1) for accommodating a flexible optical disk (16), comprising : a light transmitting window (11) which is used for recording, reproducing or erasing signals on the optical disk (16) accommodated in the optical disk cartridge (S1) ; the light transmitting window (11) being formed into a substantially arcuate shape having a central angle of 45° to 120° ; the optical disk (16) being constituted by a flexible film (62), an optical recording medium (63) formed on the film (62), a light transmitting protective film (64) for covering the optical recording medium (63) and a center hub (12) secured to a central portion of the optical disk (16).

*Fig. 1*

EP 0 510 889 A1

## BACKGROUND OF THE INVENTION

The present invention generally relates to an optical disk cartridge for accommodating an optical disk in which information signals are recorded, reproduced or erased by using a light beam and more particularly, to an optical disk cartridge for accommodating a flexible optical disk in which a substrate is formed by a flexible thin film.

As one example of optical disks in which it is possible to record, reproduce or erase information signals by using a light beam, a magnetooptical disk has been developed conventionally. In the magnetooptical disk, indented tracks are formed coaxially or spirally on a substrate of about 1.2 mm in thickness, which is made of light transmitting polycarbonate resin or glass and a magnetooptical recording film is formed on the substrate such that the information signals are recorded, reproduced or erased on the magnetooptical recording film while the tracks are being optically traced by rotating the substrate. Meanwhile, the above substrate may also be replaced by a filmy substrate having a thickness smaller than that of the above substrate such that the information signals are recorded, reproduced or erased in the same manner as described above.

Such magnetooptical disk as described above is usually accommodated in a casing called a "cartridge" such that adhesion, etc. of dust or the like to the substrate is prevented. This cartridge is provided with an openable and closable shutter. When the cartridge has been inserted into a drive device for recording and reproducing the magnetooptical disk, the shutter is opened such that an optical head is fitted into the cartridge.

As described above, in the optical disks such as the magnetooptical disk, the cartridge is used for preventing adhesion of dust to the surface of the substrate. However, since the cartridge is openable and closable by the shutter, it is impossible to completely prevent entry of dust into the cartridge, so that recording and reproduction of the information signals may be adversely affected by dust and thus, reliability of the cartridge cannot be ensured sufficiently.

Meanwhile, since the shutter is provided at an opening of the cartridge, the opening of the cartridge is restricted by the shutter. Thus, the optical head and its drive mechanism which are fitted into the opening of the cartridge are restrained in shape. Therefore, such a problem arises that the optical head and the drive mechanism cannot be designed freely.

Furthermore, since the cartridge has the shutter, a mechanism for opening the shutter is required to be provided when the cartridge is mounted on the drive device and the drive device is structurally complicated undesirably.

For example, UK Patent GB 2216710 A discloses a recording apparatus using a flexible substrate and a cartridge for accommodating the flexible cartridge. However, since this cartridge has a shutter, it is difficult to prevent entry of dust into the cartridge and further, a mechanism for opening the shutter is required to be provided.

Meanwhile, Japanese Patent Laid-Open Publication No. 57-105833 (1982) teaches a construction in which a cartridge is completely sealed such that recording and reproduction are performed through a transparent window of the cartridge. However, in this construction, a bearing is provided in the cartridge and is magnetically driven so as to rotate a disk, the cartridge becomes structurally complicated and expensive.

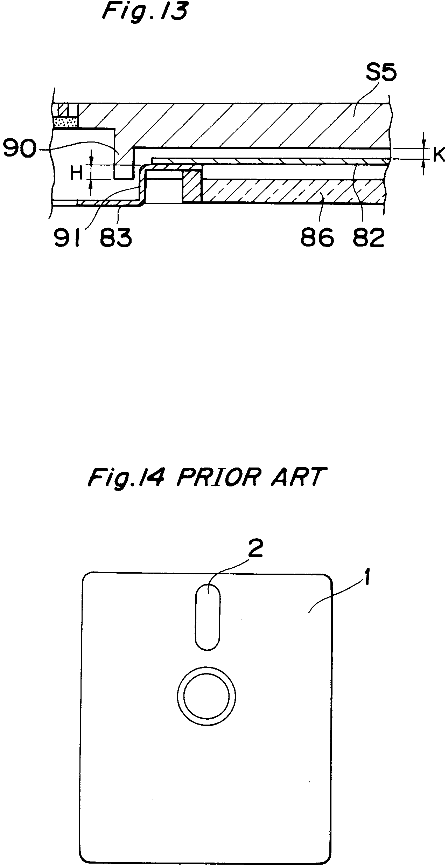

Moreover, in any one of the above described known methods, since an opening for receiving the optical head or a window 2 for allowing a light beam to be incident upon a disk, which is formed on a cartridge 1, has an elongated shape longitudinally extending in a radial direction of the optical disk as shown in Fig. 14, design of the drive device is restricted.

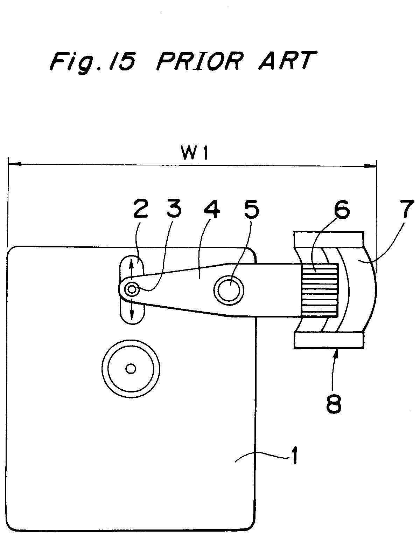

This restriction of design of the drive device becomes conspicuous when for example, a construction of Fig. 15 is employed in which an objective lens 3 of an optical head is mounted on an arm 4 and the arm 4 is rotated about a rotational shaft 5 by a linear motor 8 constituted by a coil 6 and a magnetic circuit 7. Namely, in this case, the window 2 longitudinally extends in the radial direction of the optical disk. Thus, in order to move the objective lens 3, the arm 4 should be provided at one side of the cartridge 1 as shown in Fig. 15. At this time, an apparatus in which these elements are accommodated has a large width of W1 and becomes large in size.

## SUMMARY OF THE INVENTION

Accordingly, an essential object of the present invention is provide an optical disk cartridge for accommodating a flexible optical disk, which eliminates the above mentioned disadvantages inherent in conventional optical disk cartridges.

In order to accomplish this object of the present invention, an optical disk cartridge for accommodating a flexible optical disk, according to the present invention is basically provided with a light transmitting window used for recording, reproducing or erasing signals on the optical disk accommodated in the optical disk cartridge and the light transmitting window has a substantially arcuate shape having a central angle of 45° to 120°. Furthermore, the optical disk is constituted by a flexible film, an optical recording medium formed on the film, a light transmitting protective film for covering the optical recording medium and a center hub secured to a central portion of the optical disk.

By this arrangement, information is recorded, reproduced or erased by the light transmitting window provided on the cartridge and an openable and closable shutter required so far is eliminated. Therefore, the optical disk of the present invention is not affected by dust, etc. and is highly reliable. Meanwhile, since a bearing, etc. are not provided in the cartridge, the cartridge can be produced at low cost. Furthermore, since the light transmitting window is formed into a substantially arcuate shape, degree of freedom of construction of a recording and reproducing apparatus for recording and reproducing the optical disk accommodated therein is increased and thus, optimum design of the recording and reproducing apparatus can be performed.

Meanwhile, the optical disk cartridge of the present invention has a reference surface functioning hydrodynamically such that the optical disk is rotated in close vicinity to the reference surface.

By this arrangement, motion of the optical disk in the direction of its rotational axis is regulated by hydrodynamic effects of air present between the reference surface and the optical disk and thus, axial runout of the optical disk is lessened.

Furthermore, in the optical disk cartridge of the present invention, a face of the light transmitting window acts as a reference surface functioning hydrodynamically and a surface of the protective film of the optical disk is rotated in close vicinity to the light transmitting window.

By this arrangement, the face of the light transmitting window is used as the reference surface and the protective film of the optical disk is rotated in close vicinity to this reference surface. Therefore, motion of the optical disk in the direction of its rotational axis is regulated by hydrodynamic effects of air present between the reference surface and the optical disk and thus, axial runout of the optical disk is lessened.

Moreover, in the optical disk cartridge of the present invention, the center hub of the optical disk has a flange used as a support portion during rotation of the optical disk.

By this arrangement, undesirable mechanical errors are not produced between a drive means such as a motor for rotating the optical disk and the optical disk. As a result, when the optical disk is supported by the drive means, axial position of the optical disk can be determined accurately.

In addition, in the optical disk cartridge of the present invention, a recess and a projection engageable with the recess are, respectively, provided on one of the the center hub and the cartridge and the other one of the center hub and the cartridge.

By this arrangement, in the case where the center hub is provided at the center of the optical disk so as to project out of the cartridge, motion of the optical disk in the plane perpendicular to its rotational axis can be regulated by engagement of the projection with the recess.

BRIEF DESCRIPTION OF THE DRAWINGS

This object and features of the present invention will become apparent from the following description taken in conjunction with the preferred embodiments thereof with reference to the accompanying drawings, in which:

Fig. 1 is a schematic bottom plan view of an optical disk cartridge for accommodating a flexible optical disk, according to a first embodiment of the present invention;

Fig. 2 is an enlarged fragmentary sectional view of the optical disk cartridge of Fig. 1;

Fig. 3 is a schematic fragmentary sectional view showing a modification of a center hub of the flexible optical disk of Fig. 2;

Fig. 4 is a schematic bottom plan view showing the optical disk cartridge of Fig. 1 and a magnetooptical recording and reproducing apparatus;

Fig. 5 is an enlarged fragmentary sectional view of the optical disk cartridge and the magnetooptical recording and reproducing apparatus of Fig. 4;

Fig. 6 is a schematic bottom plan view showing the optical disk cartridge of Fig. 1 and another magnetooptical recording and reproducing apparatus;

Fig. 7 is an enlarged fragmentary sectional view of the flexible optical disk of Fig. 2;

Fig. 8 is an enlarged fragmentary sectional view of an optical disk cartridge for accommodating a flexible optical disk, according to a second embodiment of the present invention;

Fig. 9 is a schematic fragmentary sectional view showing a modification of a center hub of the flexible optical disk of Fig. 8;

Fig. 10 is an enlarged fragmentary sectional view showing the optical disk cartridge of Fig. 8 and a magnetooptical recording and reproducing apparatus;

Fig. 11 is an enlarged fragmentary sectional view of an optical disk cartridge for accommodating a flexible optical disk, according to a third embodiment of the present invention;

Figs. 12 and 13 are views similar to Fig. 11, particularly showing fourth and fifth embodiments of the present invention, respectively;

Fig. 14 is a schematic bottom plan view of a prior art optical disk cartridge (already referred to); and

Fig. 15 is a schematic bottom plan view showing the prior art optical disk cartridge of Fig. 14 and a magnetooptical recording and reproducing apparatus (already referred to).

Before the description of the present invention proceeds, it is to be noted that like parts are designated by like reference numerals throughout several views of the accompanying drawings.

## DETAILED DESCRIPTION OF THE INVENTION

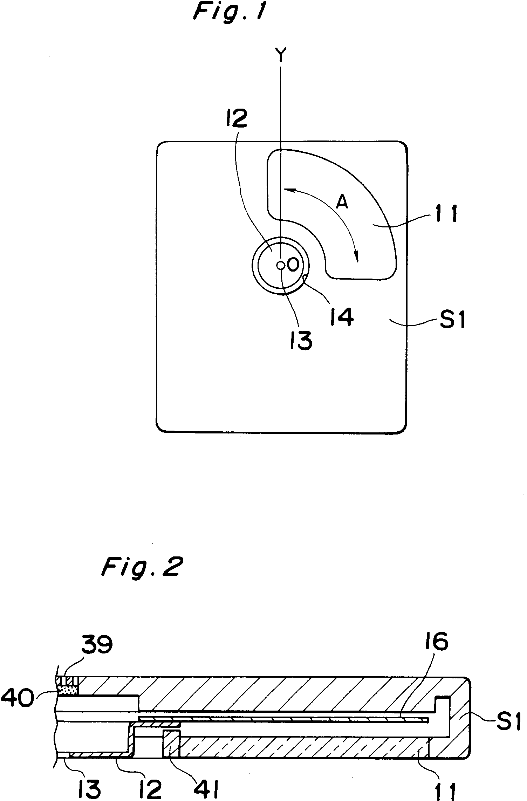

Referring now to the drawings, there is shown in Fig 1, an optical disk cartridge S1 for accommodating a flexible optical disk 16 of Fig. 2 such as a magnetooptical disk, according to a first embodiment of the present invention. A light transmitting window 11 is provided on the cartridge S1 and is formed into an arcuate shape having a center of curvature coincident with the center of the optical disk 16. An inside diameter and an outside diameter of the light transmitting window 11 are so set as to include a radial span of a recording and reproducing portion of the optical disk 16 accommodated in the cartridge S1. Furthermore, a central angle A of the light transmitting window 11 preferably ranges from 45° to 120°, for example, 90° as shown in Fig. 1.

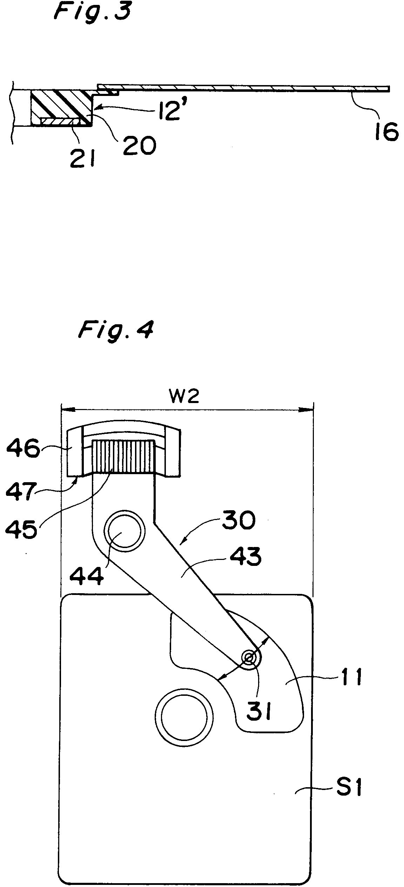

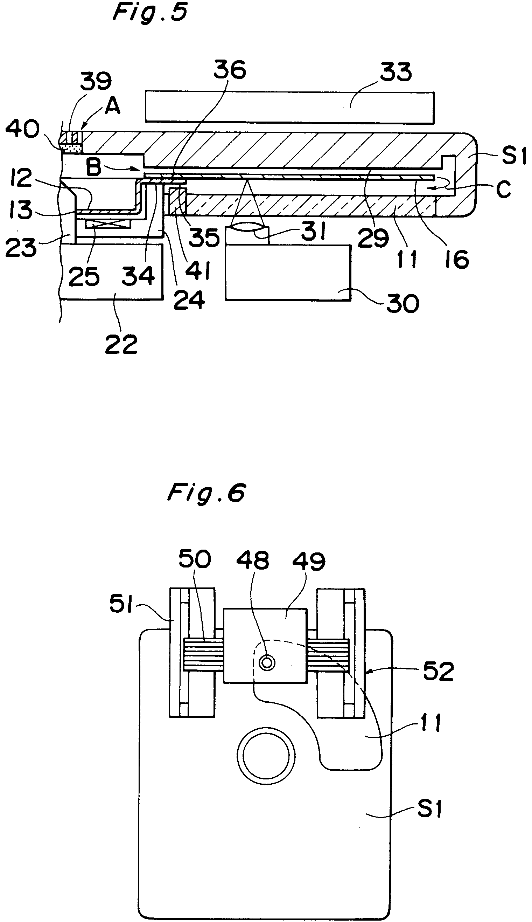

Figs. 4 and 6 show two arrangements of an optical pickup for recording, reproducing and erasing information signals on the optical disk 16 in the cartridge S1 having the light transmitting window 11. Figs. 4 and 5 show an optical pickup 30 having an objective lens 31. In the optical pickup 30, the objective lens 31 is attached to an arm 43 and the arm 43 is rotated about a rotational shaft 44 by a linear motor 47 constituted by a coil 45 and a magnetic circuit 46. If the arm 43 has a hooked shape as shown in Fig. 4, the rotational shaft 44 can be provided rearwards of the cartridge S1 and a width W2 of the cartridge S1 can be reduced, so that the apparatus as a whole can be made compact in size. On the other hand, Fig. 6 shows an optical pickup 49 having an objective lens 48. The optical pickup 49 is of linear motion type in which the optical pickup 49 is supported by a linear guide (not shown) and a linear slide (not shown) so as to be linearly moved by a linear motor 52 constituted by a coil 50 and a magnetic circuit 51.

By forming the light transmitting window 11 into an arcuate shape as described above, such advantages can be achieved that degree of freedom in construction of the optical pickups 30 and 49 increases and the apparatus can be made compact in size.

The light transmitting window 11 may be made of material transparent against wavelengths of a light beam used for recording, reproducing and erasing information signals, for example, acrylic resin (polymethyl methacrylate resin), polycarbonate resin, glass, etc. Since recording and reproduction of information signals are performed through the light transmitting window 11, it is preferable that the light transmitting window 11 is made of material which is optically uniform, is free from double refraction, defects and damage caused at the time of its production and is least likely to sustain damage after its production. To this end, glass is suitable for material of the light transmitting window 11. However, even in the case where the light transmitting window 11 is made of resinous material, desired performance of the light transmitting window 11 can be achieved if not only production conditions are selected properly but the light transmitting window 11 is subjected to a processing for raising hardness of surface of the light transmitting window 11. Meanwhile, the light transmitting window 11 may have a thickness of, for example, 0.1 to 1.5 mm.

In ordinary optical disks, a substrate through which a light beam is transmitted is usually set at a thickness of 1.2 mm. However, in the present invention, a sum of a thickness of the light transmitting window 11 and a thickness of a surface protective film of the optical disk 16 is set at about 1.2 mm. Thus, the objective lens 31 of the optical head, which is used for recording and reproduction, can also be replaced by that of ordinary optical disk apparatuses and therefore, the drive device can be designed conveniently.

On the other hand, if thickness of the light transmitting window 11 is made smaller, for example, not more than 1 mm, thickness of the cartridge S1 can be reduced. The drive device for receiving the cartridge S1 can be designed advantageously. In each case, the light transmitting window 11 should be set at a thickness suitable for the drive device.

Meanwhile, instead of providing the light transmitting window 11 on the cartridge S1, the cartridge S1 as a whole may also be made of transparent resin. However, in this case, the cartridge S1 as a whole should be made of optically uniform material, thereby resulting in rise of production cost of the cartridge S1. On the other hand, if the light transmitting window 11 is provided on the cartridge S1 as in this embodiment, optically uniform property is required of only the light transmitting window 11 and other portions of the cartridge S1 than the light transmitting window 11 may be made of, for example, opaque material. Namely, other portions of the cartridge S1 than the light transmitting window 11 may be made of resin which is not transparent optically but has a large strength and is inexpensive, thus resulting in reduction of production cost of the cartridge S1.

Meanwhile, in Fig. 1, a center hub 12 is secured to a central portion of a substrate of the optical disk 16 accommodated in the cartridge S1 so as to be exposed from a central hole 14 formed on the cartridge S1. The drive device is arranged to rotate the optical disk 16 about a bore 13 formed at the center of the center hub 12.

Fig. 2 shows a section taken along the line O-Y in Fig. 1. As the substrate of the optical disk 16, a magnetooptical recording film is formed on a film of 10 to 100 µm in thickness such that information signals are recorded in the magnetooptical recording film. In Fig. 2, the substrate is shown so as to be formed by only one layer for clarity of illustration. The center hub 12 secured to the central portion of the optical disk 16 is formed into a potlike shape by pressing a metal sheet of about 0.1 to 1 mm in thickness. The center hub 12 is preferably made of magnetic material so as to be attracted by a magnet. As shown in Fig. 3, the center hub 12 may be replaced by a center hub 12' in which magnetic material 21 is embedded in resinous material 20.

Fig. 5 shows state in which the cartridge S1 has been mounted on the drive device. This drive device corresponds to that shown in Fig. 4. The drive device includes a motor 22 and a turntable 24 fixed to the motor 22 via a rotational shaft 23 such that the rotational shaft 23 is fitted into the bore 13 of the center hub 12. A permanent magnet 25 is embedded in the turntable 24 and magnetically attracts the center hub 12 so as to secure the center hub 12 to the turntable 24. An underside 34 of a flange 36 of the center hub 12 is supported by an upper face 34 of the turntable 24 and thus, axial height of the optical disk 16 relative to the upper face 34 of the turntable 24 can be determined accurately.

In this state, the optical disk 16 is rotated by the motor 22. If a reference surface 29 of the cartridge S1 and the optical disk 16 are disposed in close vicinity to each other, motion of the optical disk 16 in the direction of its rotational axis is stabilized by hydrodynamic effects of air present between the optical disk 16 and the reference surface 29 of the cartridge S1 when the optical disk 16 is rotated, so that axial runout of the optical disk 16 is lessened. This stabilization of axial motion of such flexible substrate is known from, for example, "The Development of the Flexible Disk Magnetic Recorder", Proceeding of the IRE (January, 1961).

Meanwhile, when the optical disk 16 is rotated, air is also rotated together with the optical disk 16 by its viscosity and flows in the directions of the arrows A, B and C in Fig. 5 by centrifugal force. A pore 39 and a filter 40 are provided at the central portion of the cartridge S1 so as to filter dust, etc. in air flowing into the cartridge S1. Hence, clean air flows into the cartridge S1 at all times and thus, such an undesirable phenomenon does not take place that dust adheres to the optical disk 16 so as to hinder recording, reproduction or erasure. Therefore, the cartridge S1 does not require a sealed construction in which a bearing is provided in the cartridge as disclosed in Japanese Patent Laid-Open Publication No. 57-105833 (1982). Accordingly, in the present invention, since a gap may exist between the center hub 12 and the cartridge S1, the cartridge S1 can be produced at low cost.

While the optical disk 16 is being rotated, signals are recorded on the optical disk 16 by the optical pickup 30. A laser beam converged by the objective lens 30 is irradiated over the optical disk 16 through the light transmitting window 11 by the optical pickup 30 such that signals are recorded on the optical disk 16. It is known that assuming that the optical disk 16 is a magnetooptical disk, magnetooptical recording is performed in the following methods. In one method, a magnetooptical recording film in which overwriting can be performed through optical modulation is formed on the cartridge S1 such that signals are recorded on the magnetooptical recording film by a magnetic field applying means 33 (Fig. 5) spaced from the optical disk 16 through the cartridge S1. Principle of this overwriting through optical modulation is described in detail in "Nikkei Electronics", No. 506 (August 6, 1990) pages 173-180. In another method, if overwriting is not performed, a magnetooptical recording film is made of amorphous alloy of rare earth elements and transition metals and erasure and recording: can be performed by using the magnetic field applying means 33. In these cases, an electromagnet or a permanent magnet can be used as the magnetic field applying means 33. Meanwhile, the optical pickup 30 is displaced in the radial direction of the optical disk 16 by the arm 43 of Fig. 4 so as to record, reproduce or erase target signals.

When the cartridge S1 is detached from the turntable 24, the cartridge S1 is lifted upwardly by a proper means (not shown). Hence, an inner peripheral edge 41 of the cartridge S1 pushes the underside 35 of the center hub 12 upwardly and thus, the center hub 12 is detached from the turntable 24. By employing this procedure, no stress is applied to the optical disk 16 itself, so that the optical disk 16 is not deformed.

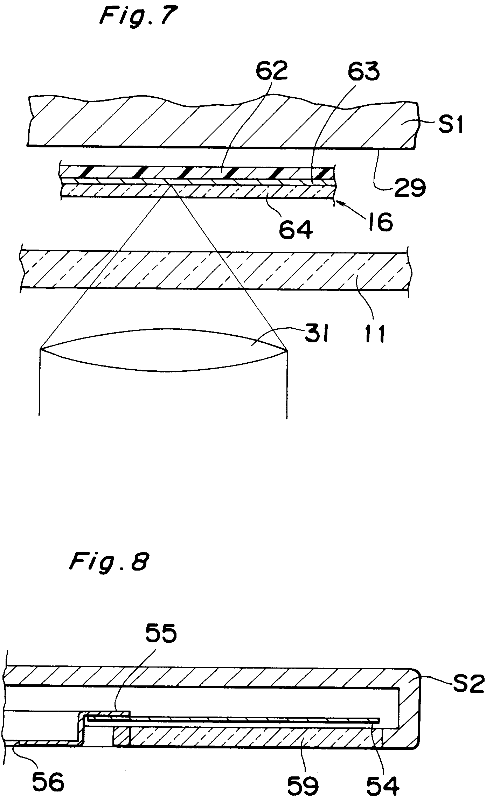

Fig. 7 shows structure of the optical disk 16. In Fig. 7, the optical disk 16 is rotated along the reference surface 29 of the cartridge S1 and rotation of the optical disk 16 is stabilized by hydrodynamic effects of air present between the optical disk 16 and the reference surface 29 of the cartridge S1. Recording, reproduction or erasure of signals is performed through the light transmitting window 11 by the objective lens 31. In the optical disk 16, a magnetooptical recording film (optical recording film) 63 and a light transmitting protective film 64 are formed on a film 62 acting as a substrate. The film 62 may be made of polyethylene terephthalate, polyimide, fluoric resin, etc. The magnetooptical recording film 63 may be formed by an artificial lattice film in which multiple layers of either amorphous alloys of rare earth elements such as Gd, Tb, Dy, Nd, etc. and transition metals such as Fe, Co, etc. or Pt/Co, Pd/Co, etc. are stacked on one another. Alternatively, the magnetooptical recording film 63 may be obtained by a method in which a construction having the above mentioned layers interposed between dielectric films of AlN, SiN, etc. is formed by sputtering or vacuum deposition so as to possess magnetooptical effects. The light transmitting protective film 64 can be made of ultraviolet-curing resin through which a light beam used for recording, reproduction or erasure can be transmitted. The film 62 is so provided as to confront the reference surface 29 of the cartridge S1. Thus, even if the film 61 should rub the reference surface 29 when rotation of the optical disk 16 is started, the light transmitting protective film 64 for reading out signals is not damaged. As a result, recording, reproduction or erasure of signals is not adversely affected.

Meanwhile, by employing the light transmitting protective film 64, the film 62 may be made of material which is not transparent optically. Therefore, the film 62 can be made of material which is not transparent but is excellent in heat resistance, mechanical properties and reliability. In this case, such an advantage is achieved that even if temperature of the film 62 rises by influence of formation of the magnetooptical recording film 63 when the magnetooptical recording film 63 is formed on the film 62, the film 62 is not adversely affected.

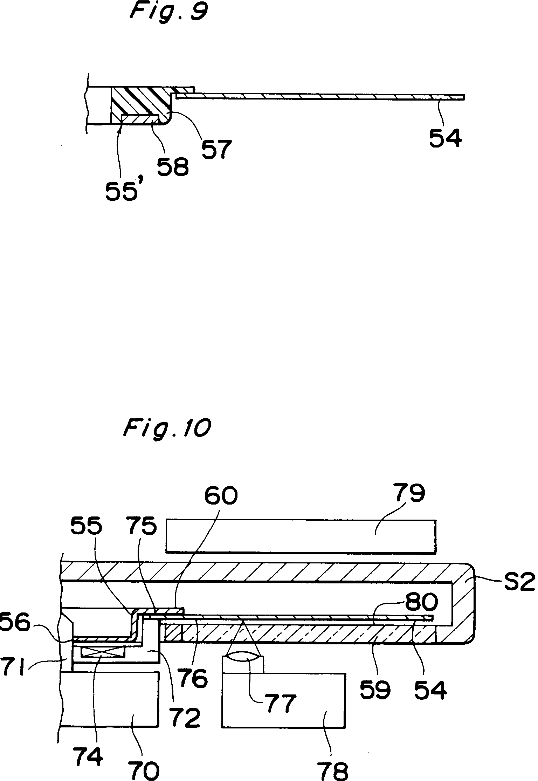

Fig. 8 shows an optical disk cartridge S2 for accommodating a flexible optical disk 54, according to a second embodiment of the present invention. In the optical disk 54, a magnetooptical recording film is formed on a film of 10 to 100 μm in thickness such that information signals are recorded on this magnetooptical recording film in the same manner as in the first embodiment. A center hub 55 is secured to a central portion of the optical disk 54. A bore 56 is formed at the center of the center hub 55. In the same manner as in the first embodiment, the center hub 55 is formed into a potlike shape by pressing a metal sheet of about 0.1 to 1 mm in thickness and is preferably made of material which is attracted by a magnet. Meanwhile, as shown in Fig. 9, the center hub 55 may be replaced by a center hub 55′ in which magnetic material 58 is embedded in resinous material 57. The cartridge S2 is provided with a light transmitting window 59 and a light beam is incident upon the optical disk 54 through the light transmitting window 59 such that recording, reproduction or erasure of information is performed on the optical disk 54.

Fig. 10 shows state in which the cartridge S2 has been mounted on a drive device. The drive device includes a motor 70 and a turntable 72 which is secured to an output shaft of the motor 70 through a rotational shaft 71. The rotational shaft 71 is fitted into the bore 56 of the center hub 55. A permanent magnet 74 is embedded in the turntable 72 and magnetically attracts the center hub 55 so as to fix the center hub 55 to the turntable 72. A portion of an underside 76 of the optical disk 54, which corresponds to a flange 60 of the center hub 55, is supported by an upper face 75 of the turntable 72. By this arrangement, positioning of the optical disk 54 relative to the upper face 75 of the turntable 72 does not contain undesirable mechanical errors and thus, axial position of the optical disk 54 relative to the upper face 75 of the turntable 72 can be determined accurately when the underside 76 of the optical disk 54 is supported by the upper face 75 of the turntable 72. When the optical disk 54 is rotated by the motor 70 in this state, motion of the optical disk 54 in the direction of its rotational axis is stabilized by hydrodynamic effects of air present between the optical disk 54 and the light transmitting window 59 of the cartridge S2, so that axial runout of the optical disk 54 is lessened. Meanwhile, the drive device includes a magnetic field applying means 79 and an optical pickup 78 having an objective lens 77. An upper face of the light transmitting window 59 can also be employed as a reference surface 80 for rotation of the optical disk 54.

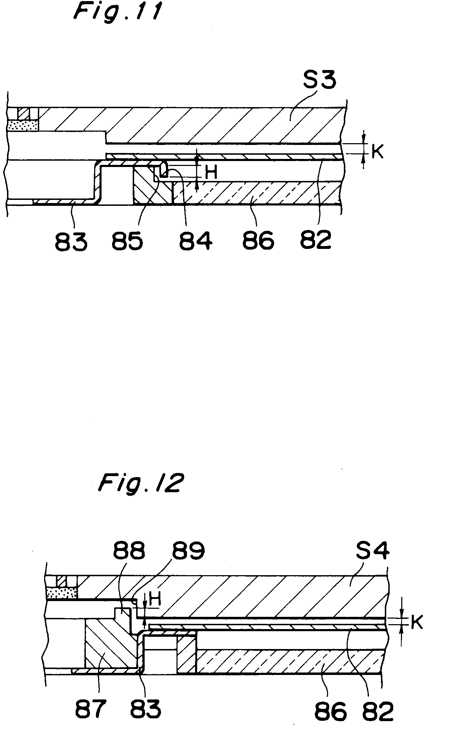

Figs. 11 to 13 show optical disk cartridges S3 to S5 according to third to fifth embodiments of the present invention, respectively. In Fig. 11, an outer peripheral edge of a center hub 83 fixed to a flexible optical disk 82 in the cartridge S3 is bent so as to form a downwardly directed projection 84. Meanwhile, a recess is defined by an outer cylindrical surface 85 of an annular hub of the cartridge S3 and the projection 84 of the optical disk 82 is engaged with the recess of the cartridge S3 such that motion of the optical disk 82 in a plane perpendicular to its rotational axis is regulated by engagement of the projection 84 with the recess of the cartridge S3. The cartridge S3 is provided with a light transmitting window 86.

In Fig. 12, a central member 87 is secured to the center hub 83 and a projection 88 is formed on an upper face of the central member 87 so as to be fitted into a recess defined by a cylindrical surface 89 of a hole formed in the cartridge S4 such that motion of the optical disk 82 in a plane perpendicular to its rotational axis is regulated by engagement of the projection 88 with the recess of the cartridge S4.

In Fig. 13, a cylindrical projection 90 is formed at a radially inner portion of the cartridge S5 and is fitted into a recess defined by an inner peripheral surface 91 of the center hub 83 so as to regulate motion of the optical disk 82 in a plane perpendicular to its rotational axis.

In Figs. 11 to 13, a depth H of engagement of the projection with the recess is required to be larger than a distance K of an axial play of the optical disk 82 in the cartridge.

As described above, the optical disk cartridge according to the present invention is basically provided with the light transmitting window used for recording, reproducing or erasing signals on the optical disk accommodated in the optical disk cartridge and the light transmitting window has a substantially arcuate shape having a central angle of 45° to 120°. Furthermore, the optical disk is constituted by the flexible film, the optical recording medium formed on the film, the light transmitting protective film for covering the optical recording medium and the center hub secured to the central portion of the optical disk.

By this arrangement, information is recorded, reproduced or erased by the light transmitting window provided on the cartridge and an openable and closable shutter required so far is eliminated. Therefore, the optical disk of the present invention is not affected by dust, etc. and is highly reliable. Meanwhile, since a bearing, etc. are not provided in the cartridge, the cartridge can be produced at low cost. Furthermore, since the light transmitting window is formed into a substantially arcuate shape, degree of freedom of construction of the recording and reproducing apparatus for recording and reproducing the optical disk accommodated therein is increased and thus, optimum design of the recording and reproducing apparatus can be performed.

Meanwhile, the optical disk cartridge of the present invention has the reference surface functioning hydrodynamically such that the optical disk is rotated in close vicinity to the reference surface.

By this arrangement, motion of the optical disk in the direction of its rotational axis is regulated by hydrodynamic effects of air present between the reference surface and the optical disk and thus, axial runout of the optical disk is lessened.

Furthermore, in the optical disk cartridge of the present invention, the face of the light transmitting window acts as the reference surface functioning hydrodynamically and the surface of the protective film of the optical disk is rotated in close vicinity to the light transmitting window.

By this arrangement, the face of the light transmitting window is used as the reference surface and the protective film of the optical disk is rotated in close vicinity to this reference surface. Therefore, motion of the optical disk in the direction of its rotational axis is regulated by hydrodynamic effects of air present between the reference surface and the optical disk and thus, axial runout of the optical disk is lessened.

Moreover, in the optical disk cartridge of the present invention, the center hub of the optical disk has the flange used as the support portion during rotation of the optical disk.

By this arrangement, undesirable mechanical errors are not produced between the drive means such as the motor for rotating the optical disk and the optical disk. As a result, when the optical disk is supported by the drive means, axial position of the optical disk can be determined accurately.

In addition, in the optical disk cartridge of the present invention, the recess and the projection engageable with the recess are, respectively, provided on one of the center hub and the cartridge and the other one of the center hub and the cartridge.

By this arrangement, motion of the optical disk in the plane perpendicular to its rotational axis can be regulated by engagement of the projection with the recess.

The invention being thus described, it will be obvious that the same may be varied in many ways. Such variations are not to be regarded as a departure from the scope of the invention.

There are described above novel features which the skilled man will appreciate give rise to advantages. These are each independent aspects of the invention to be covered by the present application, irrespective of whether or not they are included within the scope of the following claims.

## Claims

1. An optical disk cartridge (S1) for accommodating a flexible optical disk (16); comprising:
   a light transmitting window (11) which is used for recording, reproducing or erasing signals on the optical disk (16) accommodated in the optical disk cartridge (S1);
   the light transmitting window (11) being formed into a substantially arcuate shape having a central angle of 45° to 120°;
   the optical disk (16) being constituted by a flexible film (62), an optical recording medium (63) formed on the film (62), a light transmitting protective film (64) for covering the optical recording medium (63) and a center hub (12) secured to a central portion of the optical disk (16).

2. An optical disk cartridge (S1) as claimed in Claim 1, which has a reference surface (29) functioning hydrodynamically such that the optical disk (16) is rotated in close vicinity to the reference surface (29).

3. An optical disk cartridge (S2) as claimed in Claim 1, wherein a face of the light transmitting window (59) acts as a reference surface (80) functioning hydrodynamically and a surface of the protective film of the optical disk (54) is rotated in close vicinity to the light transmitting window (59).

4. An optical disk cartridge (S1) as claimed in Claim 1, wherein the center hub (12) has a flange (36) used as a support portion during rotation of the optical disk ( 16 ).

5. An optical disk cartridge (S3-S5) as claimed in Claim 1, wherein a recess (85, 89, 91) is provided on one of the center hub (83) and the optical disk cartridge (S3-S5), while a projection (84, 88, 90) engageable with the recess (85, 89, 91) is provided on the other one of the center hub (83) and the optical disk cartridge (S3-S5).

6. An optical disk cartridge comprising an optical storage medium in the form of a disk (16) which has a recording layer on which data can be recorded and/or reproduced and/or erased using a light beam, and a housing (S1) which accommodates said disk and which includes a light-transmissive window (11) for the light beam, said window being arcuate in shape with the center of curvature of the arc being coincident with the center of the disk, and the radial width of the arcuate window being set so as to include the radial span of the recording portion of the disk.

7. An optical disk cartridge comprising an optical storage medium in the form of a disk (16) which has a recording layer on which data can be recorded and/or reproduced and/or erased using a light beam, and a housing (S1) which accommodates said disk and which includes a light-transmissive window (11) for the light beam, said housing including an aperture (39) provided in the vicinity of the center of the disk, through which aperture air enters said housing due to an air flow created in the housing by centrifugal forces during disk rotation, and a filter (40) being provided to filter the air entering said housing.

*Fig. 1*

*Fig. 2*

## Fig.3

## Fig.4

Fig.5

Fig.6

## Fig.7

## Fig.8

## Fig. 9

## Fig. 10

*Fig.11*

S3

83 85 84 86 82

K

H

*Fig.12*

88 89 S4

H

K

87 83 86 82

*Fig.13*

*Fig.14 PRIOR ART*

*Fig.15 PRIOR ART*

**European Patent Office**

## EUROPEAN SEARCH REPORT

Application Number

EP 92 30 3486

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 391 563 (IMPERIAL CHEMICAL INDUSTRIES) * abstract; claims 1-4,18 * | 1-3,6 | G11B7/24 G11B23/033 |
| Y | | 4,7 | |
| Y | PATENT ABSTRACTS OF JAPAN vol. 4, no. 115 (P-023)16 August 1980 & JP-A-55 070 945 ( MATSUSHITA ELECTRIC IND CO ) 28 May 1980 * abstract * | 4 | |
| Y | PATENT ABSTRACTS OF JAPAN vol. 13, no. 440 (P-940)4 October 1989 & JP-A-1 169 797 ( NEC CORP ) 5 July 1989 * abstract * | 7 | |
| X | EP-A-0 130 364 (INTERNATIONAL BUSINESS MACHINES) * abstract * | 6 | |
| A | | 1 | |
| X | EP-A-0 420 112 (HITACHI LTD) * claim 1 * | 6 | TECHNICAL FIELDS SEARCHED (Int. Cl.5 ) |
| A | | 1 | |
| A | PATENT ABSTRACTS OF JAPAN vol. 4, no. 31 (P-2)(513) 18 March 1980 & JP-A-55 004 710 ( TOPPAN INSATSU K K ) 14 January 1980 * abstract * | 1 | G11B |

The present search report has been drawn up for all claims

| Place of search | Date of completion of the search | Examiner |
|---|---|---|
| THE HAGUE | 27 AUGUST 1992 | ANNIBAL P. |

EPO FORM 1503 03.82 (P0401)